# EUROPÄISCHE PATENTSCHRIFT

(11) **EP 0 797 545 B1**
(45) Veröffentlichungstag und Bekanntmachung des Hinweises auf die Patenterteilung: **08.03.2000**
(21) Anmeldenummer: 95942140.5
(22) Anmeldetag: 13.12.1995
(51) Int. Cl.: C02F 3/10, B01D 46/52, B01D 29/00

(54) **TRÄGERMATERIALBAND FÜR MIKROORGANISMEN FÜR DIE BIOLOGISCHE REINIGUNG VON FLUIDEN**
CARRIER MATERIAL FOR MICRO-ORGANISMS FOR BIOLOGICALLY PURIFYING FLUIDS
MATERIAU SUPPORT POUR MICROORGANISMES, PERMETTANT L'EPURATION BIOLOGIQUE DE FLUIDES

(30) Priorität: 13.12.1994 DE 4444331
(43) Veröffentlichungstag der Anmeldung: 01.10.1997
(73) Patentinhaber: STRÄHLE & HESS GmbH, D-75382 Althengstett (DE)
(72) Erfinder: MORITZ, Dieter, D-75365 Calw (DE); KRÄMER, Steffen, D-72764 Reutlingen (DE); HIRLINGER, Martin, D-72768 Reutlingen (DE)
(74) Vertreter: Wössner, Gottfried, Dr. Dipl.-Chem.
(86) Internationale Anmeldenummer: EP9504923
(87) Internationale Veröffentlichungsnummer: WO9618582

(56) Entgegenhaltungen:
- WO-A-91/02649
- DE-U- 9 109 473
- US-A- 4 229 386
- US-A- 4 422 930
- US-A- 5 423 988
- PATENT ABSTRACTS OF JAPAN vol. 11, no. 222 (C-435), 18.Juli 1987 & JP,A,62 038294 (MORITO HASEGAWA), 19.Februar 1987,

## Beschreibung

Die Erfindung betrifft ein Trägermaterialband für Mikroorganismen für die biologische Reinigung von Fluiden und insbesondere. ein Trägermaterial, welches sich zur Herstellung von Filtern, die für die biologische Abluftreinigung und Abwasserreinigung geeignet sind, nützen läßt. Das Trägermaterial umfaßt eine Vielzahl parallel zueinander angeordneter Garnabschnitte und einen Trägerstreifen, welcher die Garnabschnitte trägt und in ihrer jeweiligen Lage fixiert, wobei der Trägerstreifen ein flexibles, textiles Band ist.

Bei der biologischen Reinigung von industriellen Abluftströmen, welche technische Lösemittelgemische enthalten, wird die Entscheidung zugunsten eines biologischen Reinigungsverfahrens häufig dadurch erschwert, daß es sich bei den Abluftströmen um Gemische aus Substanzen handelt, die sich hinsichtlich ihrer Wasserlöslichkeit und damit ihrer Verfügbarkeit für die die Substanzen abbauenden Mikroorganismen erheblich unterscheiden.

Problematisch ist weiterhin, daß bei den sogenannten Biofilteranlagen relativ hohe Oberflächen wünschenswert sind, die über möglichst lange Zeit für die Filtration zur Verfügung stehen sollen. Um andererseits eine biologische Abluftreinigung realisieren zu können, ist es notwendig, die Mikroorganismen, die auf einem Trägermaterial angeordnet sind, lebensfähig und damit in einer Umgebung zu halten, in der sie sich vermehren können. Durch das Wachstum der Mikroorganismen wächst jedoch die zur Verfügung stehende Biomasse und überwächst dabei Oberflächenstrukturen, was zu einer drastischen Verminderung der zur Verfügung stehenden Oberfläche als Kontaktoberfläche für die zu reinigenden Gase führt. Ein Austausch der Filterelemente muß normalerweise begleitet werden von einem Wiederaufbringen der Biomasse, die den Abbau der in den Abluftströmen enthaltenen Schadstoffe bewirkt.

Aus der Abwasserreinigungstechnik sind textile Materialien als Träger für Biomasse bekannt, welche schnurförmige oder gitterartig flächige Gewirke darstellen, bei welchen zusätzlich eingearbeite Polfäden herabhängende Henkel bilden.

Problematisch bei diesen Materialien ist nicht nur, daß die zusätzlichen Polfäden in dem Gewirke nicht ausreichend fixiert sind und das Material insgesamt nicht schiebefest ist, d.h. sich bei einwirkenden Schubkräften in seiner Struktur verändert, sondern auch, daß diese Materialien beim Besiedeln mit Biomasse ihre Feinstruktur verlieren und mit deren umgebendem Fluid lediglich über eine relativ glattflächige Oberfläche in Kontakt stehen, was die Reinigungsleistung pro Volumeneinheit stark vermindert.

Aus der US-amerikanischen Patentschrift US-PS 4,422,930 ist eine Filtervorrichtung zur biologischen Abwasserreinigung bekannt, bei der die Mikroorganismen auf ein textiles Trägermaterial aufgebracht werden können. Das Trägermaterial umfaßt ein flexibles Band mit schräg zu diesem ausgerichteten Garnabschnitten. Das Band ist zickzackförmig aufgespannt, und die Garnabschnitte ragen seitlich aus dem Band hervor. Um zu vermeiden, daß die Garnabschnitte aufgrund der mit dem Wachstum der Mikroorganismen zunehmenden Biomasse mit dem Band verkleben und so die für die Mikroorganismen zur Verfügung stehende Oberfläche innerhalb relativ kurzer Zeit stark vermindert wird, muß bei dieser bekannten Filtervorrichtung eine turbulente Strömung aufrechterhalten werden.

Aufgabe der vorliegenden Erfindung ist es, ein geeignetes Trägermaterial für die biologische Reinigung von Fluiden zu schaffen, das obenerwähnte Probleme vermeidet bzw. einer Lösung zuführt.

Diese Aufgabe wird bei einem textilen Trägermaterial der eingangs genannten Art erfindungsgemäß durch die im Anspruch 1 angegebenen Merkmale gelöst.

Ein textiles Trägermaterial entsprechend der vorliegenden Erfindung läßt sich leicht zu einem Filter mit relativ großer Oberfläche pro Rauminhalt, beispielsweise von 3 000 m²/m³ und mehr, verarbeiten. Bei dem textilen Trägermaterial kann darüber hinaus eine Materialauswahl erfolgen, die zu einer guten Verhaftung der bakteriellen Mischkulturen führt, wobei gegebenenfalls ein Abreinigen des bewachsenen Trägermaterials gegen Ende der Standzeit des Filters mit bloßem Wasserstrahl gelingt unter Aufrechterhaltung einer Mindestpopulation auf dem Trägermaterial, das ein unmittelbares Wiedereinsetzen des abgereinigten Filters in einer Filteranlage erlaubt. Damit entfällt umfangreiches und kostenträchtiges Wiederbeimpfen des Trägermaterials mit den bakteriellen Mischkulturen, und die zeitliche Verfügbarkeit der Filter steigt erheblich.

Im Gegensatz zu den bekannten Trägermaterialien bleiben die Garnabschnitte bei dem erfindungsgemäßen Trägermaterial beim Besiedeln mit Biomasse in ihrer Feinstruktur, d.h. als einzelne Garnabschnitte erkennbar, erhalten, so daß über lange Zeiträume eine relativ große besiedelte Oberfläche pro Volumeneinheit eines Filters in Kontakt mit dem umgebenden Fluid erhalten bleibt. Insbesondere bei der Abwasserreinigung erstrecken sich die einzelnen Garnabschnitte im wesentlichen frei und ungehindert von benachbarten Garnabschnitten vom Trägerstreifen weg in das umgebende Fluid und können von diesem umströmt werden.

Die Ausgestaltung des Trägerstreifens in Form eines flexiblen, textilen Bandes hat den Vorteil, daß das Trägermaterial bei der Produktion auf einen Spulenkern aufgewickelt werden kann und so ein Einsatz, bei dem die Filterelemente unter Aufspannen des Materials auf einen Tragrahmen gebildet werden, nicht nur vereinfacht ist, sondern es ergibt sich auch eine besonders einfache Herstellung des Trägermaterials insgesamt. Darüber hinaus läßt sich das flexible, textile Band sehr einfach bei der Bildung der Filterelemente verwenden, wie dies weiter unten noch ausführlicher dargestellt werden wird.

Gemeinsames Ziel sowohl bei der Abluft- als auch der Abwasserreinigung ist, eine möglichst hohe Oberfläche /m³ für die Besiedelung mit Biomasse bereitzustellen. Dies bedeutet, daß eine möglichst dichte Packung des Trägers angestrebt wird. Aufgrund der großen Unterschiede zwischen den Fluiden Abluft und Abwasser sind bei der Abluftreinigung beispielsweise um 3- bis 4fach höhere Packungsdichten möglich, verglichen mit denen bei der Abwasserreinigung. Limitierend für die realisierbare Packungsdichte ist der Strömungswiderstand der Filtermaterialien.

Beispielsweise können von dem erfindungsgemäßen Trägermaterial in Bandform bis zu ca. 1500 bis 2000 m/m³ mit optimalen Ergebnissen in der Abluftreinigung eingesetzt werden, während von dem bandförmigen Trägermaterial bei der Abwasserreinigung der Bereich von ca. 500 bis 700 m/m³ bevorzugt wird. Die vorgenannten Werte stellen lediglich grobe Richtwerte dar, und in speziellen Fällen können optimale Reinigungsergebnisse auch mit stark abweichenden Packungsdichten erreicht werden.

Bevorzugt werden die textilen Trägermaterialien so aufgebaut, daß jeweils zwei benachbarte Garnabschnitte miteinander zu einer Schleife verbunden sind. Dadurch erhält man eine gewisse Stabilisierung der Garnabschnitte, soweit sie über den Trägerstreifen hinausstehen, und eine Stabilisierung der anfangs gegebenen Oberflächengestalt bzw. der Belegung des Durchströmquerschnittes des Filters. Weiter bevorzugt ist vorgesehen, daß die Garnabschnitte von einem in parallelen Schleifen gelegten Endlosmaterial gebildet werden, wobei hier eine besonders einfache und kostensparende Herstellungsweise ermöglicht wird. Insbesondere entfällt die Handhabung von auf kurze Längen abgelängten Garnabschnitten bzw. das Auftrennen von Schleifen. Darüber hinaus wird der Stabilisierungseffekt, wie oben beschrieben, in gleichem Maße erhalten.

Erfindungsgemäß ist vorgesehen, daß die Garnabschnitte auf einer Seite des Trägerstreifens oder beidseitig des Trägerstreifens mit einem jeweiligen freien Ende um ca. 5 bis 80 mm, vorzugsweise 20 bis 60 mm, abstehen.

Stehen die freien Enden weniger als 10 mm vom Trägerstreifen ab, wird normalerweise das erzielbare Verhältnis von Oberfläche zu Rauminhalt des Filters unvorteilhaft klein, da der im Trägerstreifen gehaltene Teil der Garnabschnitte nur verhältnismäßig wenig zur Oberfläche beiträgt.

In speziellen Anwendungsfällen, insbesondere der Abwasserreinigung, kann jedoch bereits eine Länge der freien abstehenden Enden von ca. 5 mm ausreichend sein.

Werden die freien Enden zu lang gewählt, so fallen die freien Enden bereits im unbeladenen Zustand bei senkrecht angeordneten Trägerstreifen herab und führen so zu einer unerwünschten Verdichtung des Trägermaterials im Filter. Dies bedingt nicht nur einen wachsenden Strömungswiderstand, sondern kann auch zu einem beschleunigten Überwachsen der Oberfläche mit Biomasse führen, was gleichbedeutend mit einer vorzeitigen Erschöpfung des Filters ist. Beim Aufspannen der Trägerstreifen in horizontaler Richtung sind größere Längen der freien Enden der Garnabschnitte möglich.

Häufig reicht die Verwendung eines Trägerstreifens aus, der dann vorzugsweise mittig zur Längsausdehnung der Garnabschnitte angeordnet wird. Darüber hinaus ist jedoch auch vorstellbar, daß zwei oder mehrere Trägerstreifen parallel zueinander angeordnet sein können, welche dann vorzugsweise seitlich zueinander beabstandet sind und ein mehr oder weniger breites flächiges Trägermaterial bilden.

Möglich ist auch eine asymmetrische Anordnung des Trägerstreifens bezüglich der Längsausdehnung der Garnabschnitte.

Darüber hinaus kann vorgesehen sein, daß die Garnabschnitte an ihren jeweiligen Enden von je einem Trägerstreifen gehalten werden. Zwischen diesen beiden endständig angeordneten Trägerstreifen können je nach Länge der Garnabschnitte und Anwendungsfall einer oder mehrere Trägerstreifen angeordnet werden, welche die mittleren Teile der Garnabschnitte halten.

Bevorzugte Herstellungstechniken für den Trägerstreifen sind das Weben, das Wirken oder das Rascheln.

Die Kettfäden werden bei dieser Technologie aus Material ausgewählt, dessen Festigkeit von Feuchtigkeit und Stoffwechselprodukten der Mikroorganismen im wesentlichen unbeeinflußt bleibt, so daß kein Qualitätsabfall des Trägermaterials auch bei mehrfacher Wiederverwendung zu gewärtigen ist. Besonders geeignet sind z.B. Polyesterfäden, PP- und PE-Fäden.

Die Zahl der Kettfäden, die den Trägerstreifen als flexibles Band bilden, beginnt bei einem Kettfaden, der beispielsweise für die Rascheltechnik bereits ausreichend ist, und umfaßt darüber hinaus mehrere Kettfäden. Vorzugsweise wird die Zahl der Kettfäden auf maximal 10 beschränkt, da bis zu dieser Zahl spätestens eine ausreichende Fixierung der Garnabschnitte erreicht wird und das so gebildete flexible, textile Band auch den härtesten Bedingungen im Einsatz im Filterelement widersteht. Eine größere Zahl von Kettfäden für den Trägerstreifen ist selbstverständlich denkbar, jedoch vermindert sich dann die verfügbare freie Länge der Garnabschnitte bei gleichbleibender Länge der Garnabschnitte oder aber es werden längere Garnabschnitte vonnöten, die aber nur für einen bestimmten Anteil der Länge für eine wirksame Oberfläche sorgen können, da die Garnabschnitte in der Regel in dem textilen Band fest eingebunden und nur begrenzt zugänglich sind. Damit wird bei steigender Zahl der Kettfäden die erzielbare Oberfläche pro Volumeneinheit vermindert, so daß unter diesem Gesichtspunkt eine praktische Grenze für die Zahl der Kettfäden gesetzt ist. Die Kettfäden können darüber hinaus unabhängig von ihrer Eignung zur Anlagerung von Mikroorganismen und deren Fixierung hierauf ausgewählt werden, da durch die Garnabschnitte bereits ausreichende Oberflächenbereiche für diese Funktion zur Verfügung gestellt werden.

Erfindungsgemäß ist vorgesehen, daß die Garnabschnitte aus einem Effektgarn gebildet werden, was deutlich zu einer Steigerung der zur Verfügung stehenden Oberflächenbereiche für das Beimpfen bzw. Bewachsen mit Mikroorganismen führt.

Ein besonders geeignetes Effektgarn ist ein Schlingen umfassender Effektzwirn, insbesondere ein Bouclé-Zwirn. Bei dem Effektzwirn wird vorzugsweise darauf geachtet, daß er mindestens 4 Schlingen pro cm aufweist, um einen ausreichenden Effekt der Oberflächenvergrößerung zu erreichen.

Das schlingenbildende Fasermaterial des Effektgarns wird vorzugsweise darüber hinaus bauschig sein, d.h. es wird zumindest abschnittsweise offene Bereiche aufweisen, bei denen die Einzelfilamente der Schlingen des Effektgarns freiliegen und als Oberfläche für die Bewachsung und Beimpfung mit Mikroorganismen zur Verfügung stehen. Die offenen Bereiche können durchaus Durchmesser von 1 bis 3 mm aufweisen. Darüber hinaus ist vorstellbar, daß das die Schlingen bildende Fasermaterial des Effektgarns eine Vielzahl von freien von dem Fasermaterial abstehende freie Faserenden beinhaltet, die ebenfalls zu einer Vergrößerung der zur Verfügung stehenden Oberfläche für die Bewachsung mit Mikroorganismen führt.

Bei einem besonders bevorzugten Material wird ein Effektgarn mit einem Gewicht von ca. 1,5 bis 2,5 m/g, insbesondere von beispielsweise ca. 1,8 m/g, 2,2 m/g und 2,35 m/g verwendet.

Wie bereits oben erwähnt, gibt es Mikroorganismen, die sich zum Abbau von hydrophoben Substanzen eignen und Mikroorganismen, die wiederum eher geeignet sind, hydrophile Substanzen abzubauen.

Um den Mikroorganismen jeweils eine geeignete Trägeroberfläche zur Verfügung zu stellen, werden die Garnabschnittsfasern eine hydrophobe und/oder eine hydrophile Oberfläche umfassen, je nachdem, ob das Trägermaterial für die Reinigung von Abluft von hydrophoben oder hydrophilen Substanzen ausgebildet werden soll. Vorstellbar ist auch ein Trägermaterial, bei dem sich Garnabschnitte mit Fasern mit einer hydrophilen Oberfläche und Garnabschnitte mit Fasern einer hydrophoben Oberfläche abwechseln, so daß das Trägermaterial sowohl mit Mikroorganismen für den Abbau von hydrophoben Substanzen als auch mit Mikroorganismen für den Abbau von hydrophilen Substanzen belegt werden kann. Alternativ sind natürlich auch Kombinationen von Filterelementen in einem Filtergehäuse vorstellbar, die von Trägermaterialien mit hydrophober Oberfläche einerseits und von Trägermaterialien mit hydrophiler Oberfläche andererseits gebildet werden.

Im Falle der Ausrüstung des Trägermaterials mit Mikroorganismen, die hydrophile Substanzen abbauen, werden die Garnabschnitte und/oder der Trägerstreifen unter Verwendung von Polyamid-6,6-, PVDC-, PP-, PE-, PU- und/oder PES-Fasern hergestellt.

Insbesondere Polyamid-6,6-Fasern eignen sich hervorragend für die Bildung der Garnabschnitte und gleicherweise für die Kettfäden zur Bildung des flexiblen, textilen Bandes für den Trägerstreifen.

Vorzugsweise wird man ca. 10 bis ca. 14 Garnabschnitte pro cm Trägerstreifen vorsehen.

Mit den vordefinierten Trägermaterialien ist, wie bereits erwähnt, problemlos eine Oberfläche von 3 000 m²/m³ zu erhalten, die weit darüber hinaus gesteigert werden kann. Eine obere Grenze ergibt sich allenfalls durch eine zu große Packungsdichte des Trägermaterials, das dann einen zu großen Strömungswiderstand für die zu reinigenden Fluide bildet. Eine solche Obergrenze liegt bei ca. 6 000 m²/m³.

Demgegenüber erreichen herkömmliche Trägermaterialien für Mikroorganismen bei der biologischen Abluftreinigung, wie z.B. PU-Schäume, allenfalls Werte von ca. 500 m²/m³, und diese Materialien sind zudem mit dem Problem behaftet, daß der Zutritt der Gase deutlich erschwert wird gegenüber dem Zutritt bei den Trägermaterialien gemäß der vorliegenden Erfindung.

Darüber hinaus läßt sich das erfindungsgemäße Trägermaterial relativ leicht abreinigen, beispielsweise durch einfaches Abspritzen mit einem Wasserstrahl, wobei andererseits durch die Auswahl geeigneter Fasermaterialien für die Garnabschnitte (z.B. Polyamid-6,6-Fasern) gewährleistet werden kann, daß bei der Abreinigung eine Restpopulation der Mikroorganismen auf den Garnabschnitten verbleibt, so daß eine neue Beimpfung mit Mikroorganismen vor dem Wiederverwenden des Trägermaterials im Filter entfallen kann.

Gegenstand der Erfindung ist weiterhin eine Filtereinheit mit einem Tragrahmen und einem auf diesem Tragrahmen aufgespannten Trägermaterial, wie es zuvor schon beschrieben wurde.

Für den Tragrahmen lassen sich vielfältige und den jeweiligen Gegebenheiten angepaßte Formen realisieren, beispielsweise die Kreisform, die Rechteck- sowie Quaderform oder aber auch eine wendelförmige Ausgestaltung.

Darüber hinaus können zylinderförmige Tragrahmen verwendet werden, welche parallel zur Zylinderachse angeströmt werden. Hierbei wird vorzugsweise vorgesehen, daß zylinderförmige Tragrahmen unterschiedlichen Durchmessers ineinander gestellt werden und so den Strömungsquerschnitt gleichmäßig mit Trägermaterial belegen.

Alternativ zur Verwendung von Tragrahmen können auch andere Tragmittel eingesetzt werden. Als vorteilhaft haben sich Stützflächen bei der Herstellung von Filtereinheiten erwiesen, auf welche das vorbeschriebene erfindungsgemäße Trägermaterial aufgelegt werden kann.

Das Trägermaterial kann mit der Stützfläche verschweißt, vernäht, verheftet, etc. werden, wobei eine punktuelle Fixierung häufig ausreichend ist. Alternativ kann die Stützfläche mit einer Vielzahl von Vorsprüngen ausgebildet werden, zwischen die das erfindungsgemäße Trägermaterial eingelegt werden kann. Der Abstand zweier benachbarter Vorsprünge ist dabei vorzugsweise kleiner als die Gesamtbreite des Trägermaterials, so daß es beim Einlegen des Trägermaterials zu einer Art Verzahnung oder Verhakung zwischen dem Trägermaterial und den Vorsprüngen kommt.

Aus diesen Stützflächen mit aufgelegtem Trägermaterial können leicht mehrlagige Packungen mit einer Art Sandwich-Struktur gebildet werden, wobei bei Bedarf die einzelne Stützfläche mit dem aufgelegten Trägermaterial von einer Decklage abgedeckt werden kann.

Die Stützflächen mit aufgelegtem Trägermaterial und gegebenenfalls der Decklage können auch aufgerollt zu Filterpatronen weiterverarbeitet werden.

Die Vorsprünge der Stützflächen, wo vorhanden, können bei den mehrlagigen Packungen und bei den gerollten Filterpatronen gleichzeitig als Abstandshalter dienen.

Das Material, aus dem die Stützflächen und gegebenenfalls die Decklagen gebildet werden, ist vorzugsweise fluiddurchlässig. Hierbei ist ein textiles, insbesondere grobmaschiges Material am meisten bevorzugt. Vorzugsweise läßt sich das Stützflächenmaterial thermisch bleibend verformen, so daß sich in einem einfachen Schritt die Vorsprünge in das flächige Material einformen lassen.

Die Erfindung betrifft ferner die Verwendung der beschriebenen Trägermaterialien und Filtereinheiten bei der Abluft- oder der Abwasserreinigung.

Diese und weitere Vorteile der Erfindung werden im folgenden anhand der Zeichnung noch näher erläutert. Es zeigen im einzelnen:
- Figur 1: eine photographische Darstellung eines erfindungsgemäßen Trägermaterials;
- Figur 2: eine schematische zeichnerische Darstellung des erfindungsgemäßen Trägermaterials gemäß Figur 1;
- Figur 3: eine Detailansicht eines Garnabschnittes des Trägermaterials gemäß Figur 1 und 2 (schematisch);
- Figur 4: einen mit dem erfindungsgemäßen Trägermaterial belegten Tragrahmen, der ein Filterelement bildet;
- Figur 5: eine schematische Darstellung einer Filtervorrichtung zur biologischen Reinigung von Fluiden, welche Tragrahmen entsprechend Figur 4 beinhaltet;
- Figur 6: eine schematische Darstellung einer Filtervorrichtung mit einer flächigen Stützstruktur; und
- Figur 7: ein erfindungsgemäßes Trägermaterial mit Garnabschnitten aus Bändchengarn.

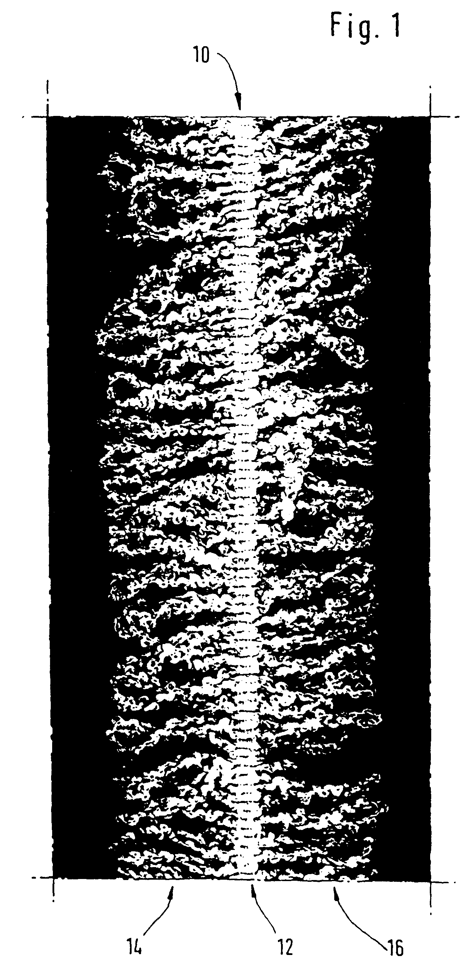

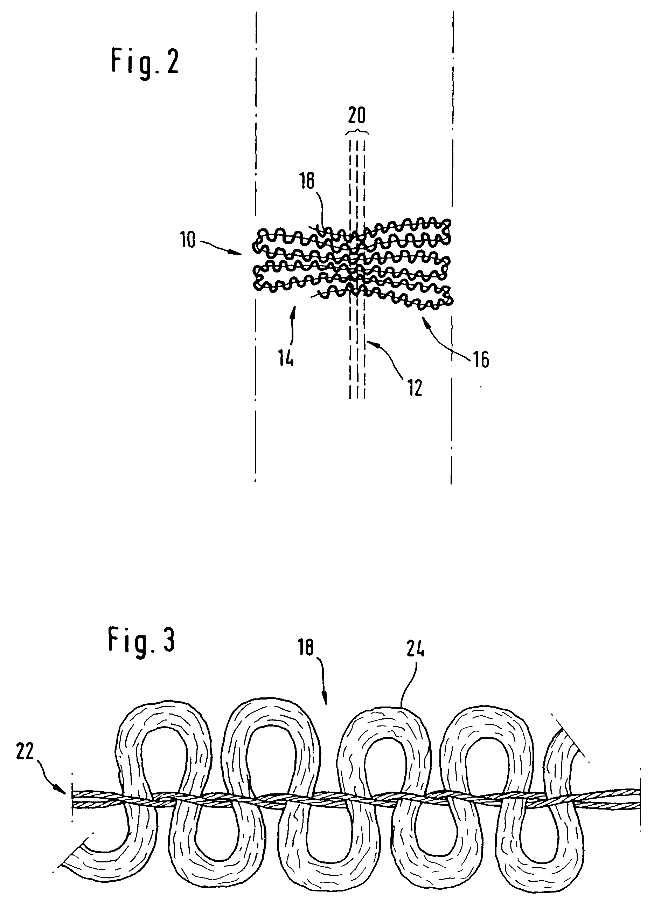

Figur 1 zeigt einen insgesamt mit dem Bezugszeichen 10 versehenes textiles Trägermaterial mit einem Trägerstreifen 12 sowie daran gehaltenen rechts und links vom Trägerstreifen 12 im wesentlichen senkrecht abstehenden und von diesem gehaltenen Garnabschnitten 14 bzw. 16. Die Garnabschnitte 14 und 16 sind einstückig aus einem in parallele Schleifen gelegten Endlosmaterial gebildet und bestehen aus einem Effektgarn 18, wie es in den Figuren 2 und 3 näher dargestellt ist. Pro cm Länge des Trägerstreifens 12 sind auf jeder Seite ca. 5 Garnabschnitte vorgesehen.

Das Effektgarn, das die Garnabschnitte 14, 16 bildet, besteht bei diesem Ausführungsbeispiel aus einem Bouclé-Zwirn, wobei der für die wirksame Oberfläche im wesentlichen allein verantwortliche Effektfaden 24 (vgl. Figur 3) aus Polyamidmultifilamentgarn mit einem Gesamttiter von 1100 dtex bei 235 Filamenten besteht. Der gezwirnte Kernfaden 22 wird vorzugsweise von einem Polyesterzwirn mit einem Gesamttiter von 360 dtex bis 500 dtex gebildet.

Die Gesamtstärke des Bouclé-Zwirns beträgt 1,8 m/g. Andere Beispiele hierfür sind 2,2 m/g und 2,35 m/g.

Der Bouclé-Zwirn umfaßt pro cm ca. 4-6 Schlingen und eine Gesamtdicke von ca. 1-3 mm. Je nach Bedarf kann aber auch mit hiervon abweichenden Dicken gearbeitet werden.

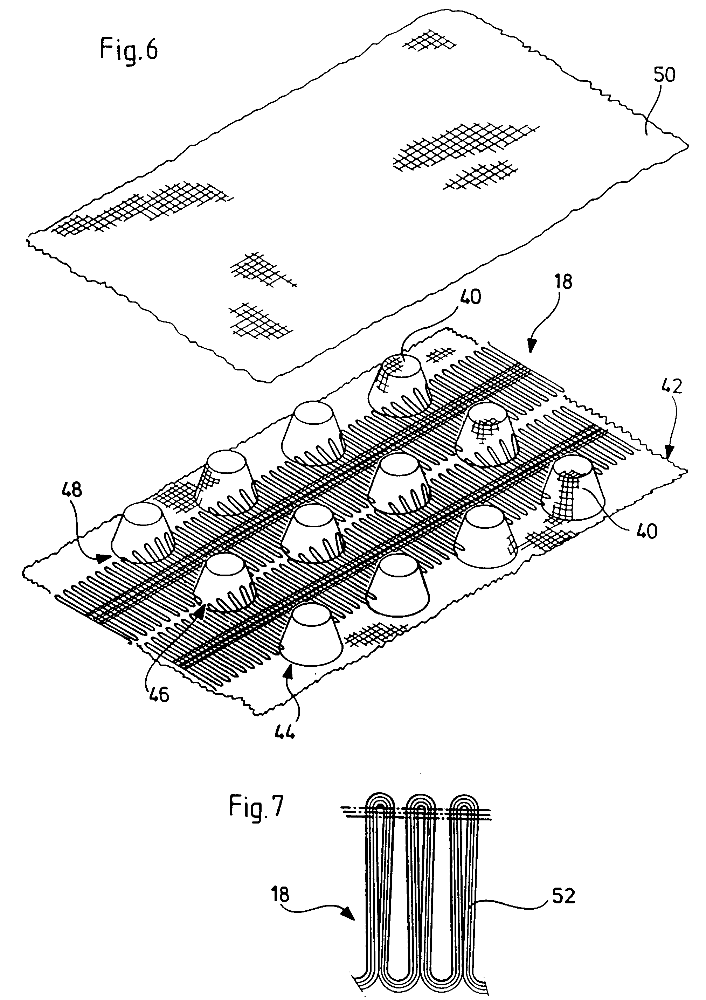

Bei aus Bändchengarnen hergestellten Garnabschnitten werden im wesentlichen Folienstreifen 52 mit einer Breite von ca. 1-2 mm verwendet (vgl. Figur 7).

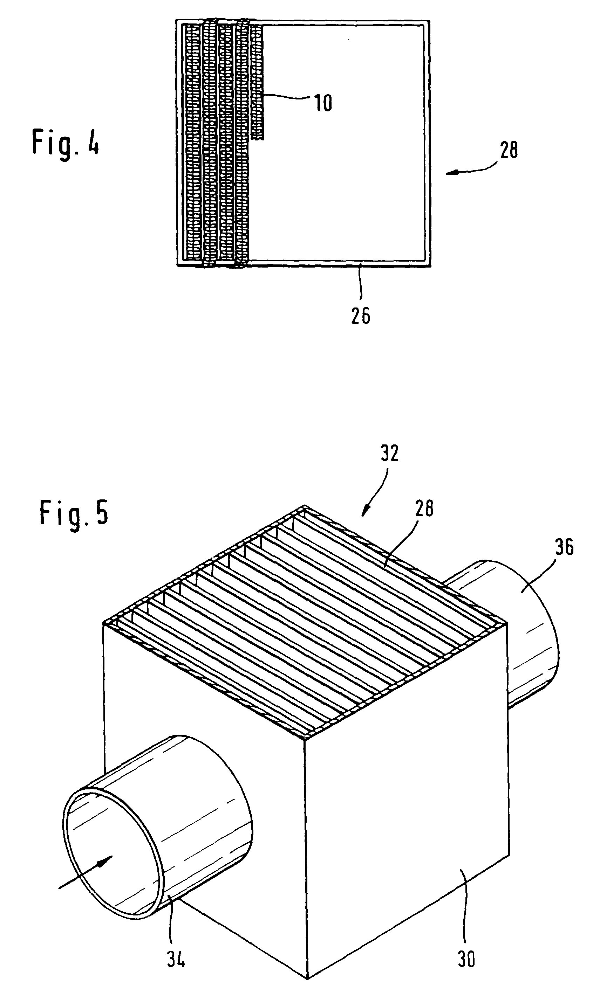

Für das gesamte Trägermaterial 10 ist eine Zugfestigkeit in Längsrichtung der Trägerstreifen 12 von 20 bis 80 N ausreichend, um das Trägermaterial 10 problemlos zu Filterelementen (vgl. Figur 4), welche dimensionsstabil sind, zu verarbeiten. Wichtig in diesem Zusammenhang ist eine Maximaldehnung bei der angegebenen Zugfestigkeit von ca. 30 % oder weniger, z.B. 20-25%, so daß auch bei beladenem, feuchtem Filter die Filtergeometrie im wesentlichen erhalten bleibt.

Die Gesamtbreite des Trägermaterials 10 beträgt bei dem in Figur 1 dargestellten Ausführungsbeispiel ca. 60-70 mm. Das Gesamtgewicht des Trägermaterials ist mit ca. 15 bis 25 m/g im unbeladenen Zustand relativ gering.

Je nach Anwendungsfall können diese Parameter variiert werden. So ist für die Gesamtbreite des Trägermaterials 10 der Bereich von 20 bis 80 mm als bevorzugt anzusehen.

In der in Figur 2 dargestellten schematischen Ansicht des erfindungsgemäßen textilen Trägermaterials sind drei Kettfäden 20 vorhanden, die zusammen mit dem in Schleifen gelegten Endlos-Effektgarn 18, welches als Schußfaden verwendet wird, den textilen, flexiblen Trägerstreifen 12 bilden.

Vorzugsweise werden die Kettfäden mit den Schußfäden (d.h. dem Effektgarn 18) in der Rascheltechnik verbunden, da hier bereits einer bzw. nur wenige Kettfäden ausreichen, um eine sichere Fixierung der Garnabschnitte 14 bzw. 16 über die Länge des textilen Trägermaterials sicherzustellen und diese auch beispielsweise gegen Herausziehen zu sichern.

Das Effektgarn 18 beinhaltet, wie in Figur 3 schematisch gezeigt, einen gezwirnten Kernfaden 22 sowie einen bauschigen Effektfaden 24. Der bauschige Effektfaden 24 sind locker miteinander verbundene Multifilamente, die Endlosfilamente oder aber Stapelfasern sein können. Die Gewichtsanteile von Zwirnfaden 22 und Effektfaden 24 betragen hier 25 % bzw. 75 %, sie lassen sich aber je nach Einsatzzweck variieren.

Die Materialauswahl ist insbesondere für den Effektfaden 24 entscheidend, da er die bei weitem größte Oberfläche für das Ansiedeln der Mikroorganismen auf dem Trägermaterial bildet. Dieses wird bevorzugt aus Polyamid-6,6-, aber auch von jedem anderen für die Ansiedlung von Mikroorganismen geeignetem Material gebildet, und als Beispiele seien hierzu PVDC- und PES- als auch PP-, PU- sowie PE-Fasern erwähnt.

Selbstverständlich kann erfindungsgemäß jedes andere, insbesondere jedes andersartige Effektgarn verwendet werden, sofern es eine ausreichende Oberfläche für die Besiedlung mit Mikroorganismen zur Verfügung stellen kann.

In Figur 4 schließlich ist das Aufspannen eines als endloses Material ausgebildeten Trägermaterials 10 auf einen Tragrahmen 26 gezeigt, wobei hier nur schematisch dargestellt ist, daß das textile Trägermaterial 10 in regelmäßigen Abständen in parallelen Schleifen um den Tragrahmen 26 geschlungen ist. Selbstverständlich ist jede denkbare und im Stand der Technik bekannte Befestigungsmöglichkeit zur Befestigung des textilen Trägermaterials auf dem Tragrahmen 26 anwendbar und keinerlei Beschränkungen unterworfen. So können die textilen Trägermaterialien beispielsweise an den Kanten des Tragrahmens 26 mit diesem verklebt sein, sie können über mechanische Befestigungselemente am Tragrahmen 26 gehalten sein, und zwar selbstverständlich sowohl bei der Verwendung des endlosen textilen Trägermaterials 10, wie in Figur 4 dargestellt, oder aber auch bei Verwendung von abgelängten textilen Trägermaterialstreifen, die in ihrer Länge der Höhe des Tragrahmens 26 angepaßt sind. Darüber hinaus sind auch über Kreuz geführte textile Trägermaterialbänder auf dem Tragrahmen 26 vorstellbar. Wie oben bereits erwähnt, bieten sich nicht nur rechteckige Tragarme, sondern auch kreisförmige, von der Kreisform abweichende oder auch zylinderförmige oder quaderförmige Tragrahmen und eine Wendel bildende Tragrahmen an.

Die von dem Tragrahmen und dem textilen Trägermaterial 10 gebildeten Filterelemente 28 werden dann vorzugsweise in ein Filtergehäuse 30 einer Filtervorrichtung 32 eingesetzt, welche in Figur 5 offen dargestellt ist. Im Einsatz wird selbstverständlich das Filtergehäuse 30 oben fest abgedeckt, so daß die über einen Einlaß 34 einströmende Abluft lediglich durch den Auslaß 36 das Filtergehäuse 30 wieder verlassen kann, nachdem es durch die Vielzahl von Filterelementen 28 hindurchgetreten ist.

Figur 6 zeigt einen alternativen Aufbau einer Filtereinheit, bei dem auf eine mit Vorsprüngen 40 versehene Stützfläche 42 streifenförmiges textiles Trägermaterial 10 aufgelegt ist. Die Vorsprünge 40 sind in parallelen Reihen 44, 46, 48 in die Stützfläche 42 eingeformt, wobei die Reihen 44, 46, 48 jeweils voneinander einen Abstand halten, welcher geringer ist als die Breite des textilen Trägermaterials 18. Dadurch wird beim Einlegen des Trägermaterials nicht nur eine Fixierung der Lage der Trägermaterialstreifen 18 quer zur Längsrichtung, sondern auch parallel zur Längsrichtung erzielt, welche für viele Anwendungsfälle bereits ausreichend ist. Selbstverständlich können die Trägermaterialstreifen 18 mit der Stützfläche 42 bei Bedarf verschweißt, vernäht oder sonstwie verheftet werden, wobei in den allermeisten Fällen ein punktuelles Verheften entlang der Längsrichtung der Trägerstreifen 18 ausreicht.

Der aus Stützfläche 42 und Trägerstreifen 18 gebildete Aufbau läßt sich bereits zu einem Mehrlagenpaket zusammenfügen. Bevorzugt jedoch werden zwischen benachbarten Lagen des Stützmaterials 42 Decklagen 50 eingefügt, was zum einen ein einfacher handhabbares Zwischenprodukt ergibt und zum zweiten sicherstellt, daß auch im Mehrlagenpaket ein von der Höhe der Vorsprünge 40 vorgegebener Lagenabstand korrekt eingehalten wird.

Die Stützfläche 42 und die aufgelegten Trägerstreifen 18, gegebenenfalls komplettiert mit der Decklage 50, lassen sich auch zu einer im wesentlichen zylindrischen Filtereinheit rollen (nicht dargestellt).

Die Stützfläche 42 und gegebenenfalls die Decklage 50 werden vorzugsweise aus einem fluiddurchlässigen, vorzugsweise selbsttragenden textilen thermoverformbaren Flächengebilde hergestellt, wobei die Durchgänge in dem Flächengebilde vorzugsweise so groß sind, daß in dem Fluid enthaltende Schwebstoffteilchen und Schmutzpartikel möglichst nicht zurückgehalten werden.

Die in Zusammenhang mit Figur 6 diskutierten Filtereinheiten werden vor allem in der Abluftreinigung mit Erfolg eingesetzt.

## Patentansprüche

1. Textiles Trägermaterialband (10) für Mikroorganismen für die biologische Reinigung von Fluiden, umfassend eine Vielzahl parallel zueinander angeordneter Garnabschnitte (14, 16) und einen Trägerstreifen (12), welcher die Garnabschnitte (14, 16) trägt und in ihrer jeweiligen Lage fixiert, wobei der Trägerstreifen (12) ein flexibles, textiles Band ist, dadurch gekennzeichnet, daß der Trägerstreifen (12) im wesentlichen senkrecht zu den Garnabschnitten (14, 16) angeordnet ist und die Garnabschnitte (14, 16) auf einer Seite des Trägerstreifens (12) oder beidseitig mit ihren freien Enden um ca. 5 bis 80 mm, weiter bevorzugt 20 bis 60 mm, abstehen, von einem Effektgarn (18) gebildet werden und zumindest teilweise den Schußfaden bilden.

2. Trägermaterial nach Anspruch 1, dadurch gekennzeichnet, daß jeweils zwei benachbarte Garnabschnitte (14, 16) miteinander zu einer Schleife verbunden sind.

3. Trägermaterial nach Anspruch 2, dadurch gekennzeichnet, daß die Garnabschnitte (14, 16) von einem in parallelen Schleifen gelegten Endlosmaterial (18) gebildet werden.

4. Trägermaterial nach einem der Ansprüche 1 bis 3, dadurch gekennzeichnet, daß der Trägerstreifen (12) ungefähr mittig zur Längsausdehnung der Garnabschnitte (14, 16) angeordnet ist.

5. Trägermaterial nach einem der Ansprüche 1 bis 4, dadurch gekennzeichnet, daß mindestens zwei Trägerstreifen vorhanden sind, welche jeweils ein Ende eines Garnabschnitts (14, 16) halten.

6. Trägermaterial nach einem der Ansprüche 1 bis 5, dadurch gekennzeichnet, daß zwei oder mehrere Trägerstreifen parallel zueinander vorhanden sind.

7. Trägermaterial nach einem der Ansprüche 1 bis 6, dadurch gekennzeichnet, daß der Trägerstreifen (12) gewoben, gewirkt oder geraschelt ist.

8. Trägermaterial nach Anspruch 7, dadurch gekennzeichnet, daß der Trägerstreifen (12) einen oder mehrere Kettfäden (20) umfaßt.

9. Trägermaterial nach Anspruch 8, dadurch gekennzeichnet, daß der Trägerstreifen (12) bis zu 10 Kettfäden (20) umfaßt.

10. Trägermaterial nach Anspruch 1, dadurch gekennzeichnet, daß das Effektgarn (18) ein Schlingen umfassender Effektzwirn, insbesondere ein Bouclé-Zwirn, ist.

11. Trägermaterial nach Anspruch 10, dadurch gekennzeichnet, daß der Effektzwirn mindestens 3 bis 4 Schlingen pro cm aufweist.

12. Trägermaterial nach Anspruch 10 oder 11, dadurch gekennzeichnet, daß das die Schlingen bildende Fasermaterial des Effektgarns bauschig ist.

13. Trägermaterial nach Anspruch 1 bis 13, dadurch gekennzeichnet, daß das Effektgarn ein Gewicht von ca. 1,5 m/g bis 2,5 m/g aufweist.

14. Trägermaterial nach einem der Ansprüche 1 bis 13, dadurch gekennzeichnet, daß die Garnabschnitte (14, 16) Fasern bzw. Folienstreifen mit einer hydrophilen Oberfläche umfassen.

15. Trägermaterial nach Anspruch 1 bis 14, dadurch gekennzeichnet, daß die Garnabschnitte (14, 16) Fasern bzw. Folienstreifen mit einer hydrophoben Oberfläche umfassen.

16. Trägermaterial nach einem der voranstehenden Ansprüche, dadurch gekennzeichnet, daß die Garnabschnitte (14, 16) und/oder der Trägerstreifen unter Verwendung von Polyamid-6,6-, PP-, PE-, PU-, PVDC- und/oder PES-Fasern hergestellt sind.

17. Filtereinheit (32) mit einem Tragrahmen (26) und einem auf diesem Tragrahmen (26) aufgespannten Trägermaterial (10) nach einem der Ansprüche 1 bis 16.

18. Filtereinheit nach Anspruch 17, dadurch gekennzeichnet, daß der Tragrahmen kreisförmig ist.

19. Filtereinheit nach Anspruch 17, dadurch gekennzeichnet, daß der Tragrahmen (26) rechteckig ist.

20. Filtereinheit nach Anspruch 17, dadurch gekennzeichnet, daß der Tragrahmen wendelförmig ausgebildet ist.

21. Filtereinheit nach Anspruch 17, dadurch gekennzeichnet, daß der Tragrahmen zylinderförmig ausgebildet ist.

22. Filtereinheit mit einer Stützfläche (42) und mehreren auf der Stützfläche (42) angeordneten Streifen eines Trägermaterials (10) nach einem der Ansprüche 1 bis 16.

23. Filtereinheit nach Anspruch 22, dadurch gekennzeichnet, daß die Stützfläche (42) eingeformte Vorsprünge (40) umfaßt, zwischen welchen das Trägermaterial (10) angeordnet ist.

24. Filtereinheit nach Anspruch 22 oder 23, dadurch gekennzeichnet, daß das Trägermaterial (10) zwischen der Stützfläche (42) und einer Decklage (50) angeordnet ist.

25. Filtereinheit nach einem der Ansprüche 22 bis 24, dadurch gekennzeichnet, daß sie eine Mehrzahl von Stützflächen (42) mit darauf angeordnetem Trägermaterial (10) in einem Stapel enthält.

26. Filtereinheit nach einem der Ansprüche 22 bis 24, dadurch gekennzeichnet, daß sie eine Stützfläche mit darauf angeordnetem Trägermaterial in aufgerollter Form umfaßt.

27. Verwendung eines Trägermaterials gemäß einem der Ansprüche 1 bis 16 bei der Reinigung von Abluft oder Abwasser.

28. Verwendung einer Filtereinheit gemäß einem der Ansprüche 17 bis 26 bei der Reinigung von Abluft oder Abwasser.

## Claims

1. Textile support material tape (10) for microorganisms for biologically cleaning fluids, comprising a multiplicity of yarn sections (14, 16), arranged parallel to one another, and a support strip (12) which carries the yarn sections (14, 16) and fixes them in their respective position, the support strip (12) being a flexible textile tape, characterised in that the support strip (12) is arranged essentially perpendicularly to the yarn sections (14, 16), and the free ends of the yarn sections (14, 16) protrude on one side of the support strip (12) or on both sides by around 5 to 80 mm, more preferably 20 to 60 mm, said yarn sections (14, 16) being formed by an effect yarn (18) and at least some of them forming the weft thread.

2. Support material according to Claim 1, characterised in that two respective adjacent yarn sections (14, 16) are connected to one another to form a bow.

3. Support material according to Claim 2, characterised in that the yarn sections (14, 16) are formed by a continuous material (18) laid in parallel bows.

4. Support material according to one of Claims 1 to 3, characterised in that the support strip (12) is arranged approximately centrally with respect to the longitudinal extent of the yarn sections (14, 16).

5. Support material according to one of Claims 1 to 4, characterised in that there are at least two support strips which each hold one end of a yarn section (14, 16).

6. Support material according to one of Claims 1 to 5, characterised in that there are two or more support strips parallel to one another.

7. Support material according to one of Claims 1 to 6, characterised in that the support strip (12) is woven, knitted or double-rib knitted.

8. Support material according to Claim 7, characterised in that the support strip (12) comprises one or more warp threads (20).

9. Support material according to Claim 8, characterised in that the support strip (12) comprises up to 10 warp threads (20).

10. Support material according to Claim 1, characterised in that the effect yarn (18) is a twisted effect yarn, particularly a bouclé twisted yarn, comprising a loop.

11. Support material according to Claim 10, characterised in that the twisted effect yarn has at least 3 to 4 loops per cm.

12. Support material according to Claim 10 or 11, characterised in that the loop-forming fibre material of the effect yarn is textured.

13. Support material according to Claim 1 to 13, characterised in that the effect yarn has a weight of around 1.5 m/g to 2.5 m/g.

14. Support material according to one of Claims 1 to 13, characterised in that the yarn sections (14, 16) comprise fibres or strips of film having a hydrophilic surface.

15. Support material according to Claim 1 to 14, characterised in that the yarn sections (14, 16) comprise fibres or strips of foil with a hydrophobic surface.

16. Support material according to one of the preceding claims, characterised in that the yarn sections (14, 16) and/or the support strip are manufactured using polyamide-6,6, PP, PE, PU, PVDC and/or PES fibres.

17. Filter unit (32) having a support frame (26) and a support material (10), tensioned on this support frame (26), according to one of Claims 1 to 16.

18. Filter unit according to Claim 17, characterised in that the support frame is circular.

19. Filter unit according to Claim 17, characterised in that the support frame (26) is rectangular.

20. Filter unit according to Claim 17, characterised in that the support frame is of helical design.

21. Filter unit according to Claim 17, characterised in that the support frame is of cylindrical design.

22. Filter unit having a support face (42) and, arranged on the support face (42), a plurality of strips of a support material (10) according to one of Claims 1 to 16.

23. Filter unit according to Claim 22, characterised in that the support face (42) comprises integral projections (40) between which the support material (10) is arranged.

24. Filter unit according to Claim 22 or 23, characterised in that the support material (10) is arranged between the support face (42) and a cover layer (50).

25. Filter unit according to one of Claims 22 to 24, characterised in that it contains a plurality of support faces (42) with support material (10) arranged on them in a stack.

26. Filter unit according to one of Claims 22 to 24, characterised in that it comprises a support face with support material arranged on it in rolled-up form.

27. Use of a support material according to one of Claims 1 to 16 for cleaning exhaust air or waste water.

28. Use of a filter unit according to one of Claims 17 to 26 for cleaning exhaust air or waste water.

## Revendications

1. Bande de matériau de support textile (10), pour micro-organismes, destinée à l'épuration biologique de fluides, comprenant un grand nombre de tronçons de fil (14, 16) disposés parallèlement les uns aux autres, et un ruban de support (12) qui supporte les tronçons de fil (14, 16) et les fixe dans leur position respective, le ruban de support (12) étant une bande textile flexible,
**caractérisée**
en ce que le ruban de support (12) est disposé sensiblement de manière perpendiculaire aux tronçons de fil (14, 16), et en ce que les tronçons de fil (14, 16) dépassent du ruban de support (12) sur un côté ou des deux côtés, avec leurs extrémités libres, d'environ 5 à 80 mm, de préférence de 20 à 60 mm, sont formés par un fil fantaisie (18), et forment, au moins en partie, les fils de trame.

2. Matériau de support selon la revendication 1, **caractérisé** en ce que les tronçons de fil (14, 16) respectivement voisins sont reliés en une boucle.

3. Matériau de support selon la revendication 2, **caractérisé** en ce que les tronçons de fil (14, 16) sont formés par un matériau sans fin (18) disposé en boucles parallèles les unes aux autres.

4. Matériau de support selon l'une des revendications 1 à 3, **caractérisé** en ce que le ruban de support (12) est disposé sensiblement de manière centrée par rapport à l'étendue en longueur des tronçons de fil (14, 16).

5. Matériau de support selon l'une des revendications 1 à 4, **caractérisé** en ce que sont prévus au moins deux rubans de support, qui maintiennent chacun une extrémité d'un tronçon de fil (14, 16).

6. Matériau de support selon l'une des revendications 1 à 5, **caractérisé** en ce que sont prévus deux rubans de support ou plus, parallèles entre-eux.

7. Matériau de support selon l'une des revendications 1 à 6, **caractérisé** en ce que le ruban de support (12) est tissé, tricoté ou est du type à mailles Rachel.

8. Matériau de support selon la revendication 7, **caractérisé** en ce que le ruban de support (12) comprend un ou plusieurs fils de chaîne (20).

9. Matériau de support selon la revendication 8, **caractérisé** en ce que le ruban de support (12) comprend jusqu'à dix fils de chaîne (20).

10. Matériau de support selon la revendication 1, **caractérisé** en ce que le fil fantaisie (18) est un retors fantaisie comprenant des boucles, notamment un retors bouclé.

11. Matériau de support selon la revendication 10, **caractérisé** en ce que le retors fantaisie comporte au moins 3 à 4 boucles par cm.

12. Matériau de support selon la revendication 10 ou 11, **caractérisé** en ce que le matériau de fibres formant les boucles du fil fantaisie est texturé.

13. Matériau de support selon les revendication 1 à 12, **caractérisé** en ce que le fil fantaisie présente un poids d'environ 1,5 m/g à 2,5 m/g.

14. Matériau de support selon l'une des revendications 1 à 13, **caractérisé** en ce que les tronçons de fil (14, 16) comprennent des fibres et/ou des rubans de film présentant une surface hydrophile.

15. Matériau de support selon les revendication 1 à 14, **caractérisé** en ce que les tronçons de fil (14, 16) comprennent des fibres et/ou des rubans de film présentant une surface hydrophobe.

16. Matériau de support selon l'une des revendications précédentes, **caractérisé** en ce que les tronçons de fils (14, 16) et/ou les rubans de support sont fabriqués en utilisant des fibres de polyamide 6,6, PP, PE, PU, PVDC et/ou PES.

17. Unité de filtre (32) comportant un cadre de support (26) et un matériau de support (10) selon l'une des revendication 1 à 16, tendu sur ce cadre de support (26).

18. Unité de filtre selon la revendication 17, **caractérisée** en ce que le cadre de support est de forme circulaire.

19. Unité de filtre selon la revendication 17, **caractérisée** en ce que le cadre de support (26) est de forme rectangulaire.

20. Unité de filtre selon la revendication 17, **caractérisée** en ce que le cadre de support est d'une configuration en forme d'hélice.

21. Unité de filtre selon la revendication 17, **caractérisée** en ce que le cadre de support est d'une configuration de forme cylindrique.

22. Unité de filtre comprenant une surface d'appui (42) et plusieurs rubans d'un matériau de support (10) selon l'une des revendications 1 à 16, disposés sur la surface d'appui (42).

23. Unité de filtre selon la revendication 22, **caractérisée** en ce que la surface d'appui (42) présente des protubérances (40), qui y sont formées, entre lesquelles est disposé le matériau de support (10).

24. Unité de filtre selon la revendication 22 ou 23, **caractérisée** en ce que le matériau de support (10) est disposé entre une surface d'appui (42) et une couche de recouvrement (50).

25. Unité de filtre selon l'une des revendications 22 à 24, **caractérisée** en ce qu'elle contient, sous forme d'empilement, un grand nombre de surfaces d'appui (42) sur lesquelles est disposé du matériau de support (10).

26. Unité de filtre selon l'une des revendications 22 à 24, **caractérisée** en ce qu'elle comprend une surface d'appui sous forme enroulée, sur laquelle est disposé du matériau de support.

27. Utilisation d'un matériau de support conforme à l'une des revendications 1 à 16, dans le cadre de l'épuration d'air vicié ou d'eaux usées.

28. Utilisation d'une unité de filtre conforme à l'une des revendications 17 à 26, dans le cadre de l'épuration d'air vicié ou d'eaux usées.
